Europäisches Patentamt

European Patent Office

Office européen des brevets

(19)

(11) Numéro de publication : **0 557 175 B1**

(12) **FASCICULE DE BREVET EUROPEEN**

(45) Date de publication du fascicule du brevet :
**29.11.95 Bulletin 95/48**

(51) Int. Cl.$^6$ : **H04B 7/26, H04Q 7/28**

(21) Numéro de dépôt : **93400374.0**

(22) Date de dépôt : **16.02.93**

(54) **Procédé de transmission de données courtes entre un équipement radio et une unité de traitement.**

(30) Priorité : **17.02.92 FR 9201762**

(43) Date de publication de la demande :
**25.08.93 Bulletin 93/34**

(45) Mention de la délivrance du brevet :
**29.11.95 Bulletin 95/48**

(84) Etats contractants désignés :
**AT BE CH DE ES FR GB GR IT LI LU NL SE**

(56) Documents cités :
**EP-A- 0 399 611**
**US-A- 4 831 373**
**JOURNAL OF THE INSTITUTION OF ELEC-
TRONIC AND RADIO ENGINEERS vol. 57, no.
3, Mai 1987, LONDON GB pages 119 - 124 P.J.
MABEY ET AL 'UK trunking system**

(73) Titulaire : **ALCATEL MOBILE
COMMUNICATION FRANCE
15, rue de la Baume
F-75008 Paris (FR)**

(72) Inventeur : **Truong, Jean-Paul - Alcatel
Radiotéléphone
Parc d'Activités Kléber, 56, Av. Jean-Jaurès
F-92707 Colombes Cedex (FR)**

(74) Mandataire : **Pothet, Jean Rémy Emile Ludovic
et al
c/o SOSPI
14-16 rue de la Baume
F-75008 Paris (FR)**

## Description

Le domaine de l'invention est celui des procédés de transmission de données et plus précisément celui des procédés de transmission de données courtes entre un équipement radio et une unité de traitement.

De façon connue, les transmissions de données entre des équipements radio fixes ou mobiles et une unité de traitement s'effectuent selon un protocole préétabli consistant à transmettre des données courtes et des données de contrôle sur une voie appelée voie balise et des données de type phonie sur des voies appelées voies de trafic. L'unité de traitement est fixe et constitue une intelligence centralisée qui gère le réseau. Cette unité de traitement sert donc à l'exploitation du réseau.

Le type de transmission précédent correspond à celui de certains réseaux de radiotéléphonie terrestre (réseaux privés dont les fréquences de trafic sont comprises entre 30 et 500 MHz à l'exception du service radiomaritime et des services fluviaux). Il existe différentes normes de transmission de données permettant d'établir une communication entre deux utilisateurs selon ce schéma. Deux de ces normes, la norme française CNET ST/PAA/TPA/2424 et la norme britannique MPT 1327 définie par le Département du Commerce et de l'Industrie (DTI) définissent les protocoles de transmission de données dans des réseaux partagés de radiotéléphonie terrestre. Selon ces normes, les données courtes correspondant soit à des messages courts dont la taille n'excède pas 23 octets, soit à des messages d'état dont la taille n'excède pas 5 bits, sont transmises sur la voie balise du réseau partagé. On entend par réseau partagé un réseau comprenant:

- une voie balise composée d'une voie descendante (transmission de l'unité de traitement vers les équipements radio se partageant le réseau) et d'une voie montante (transmission des équipements radio vers l'unité de traitement). La voie balise est unique pour un réseau partagé donné;
- une pluralité de voies de trafic composées chacune également d'une voie montante et d'une voie descendante, servant à l'écoulement de communications de type phonie (transmission de la parole), chaque voie de trafic écoulant une communication de type phonie différente.

La voie balise, également appelée canal sémaphore ou canal de signalisation, est caractérisée par une fréquence porteuse de l'information différente de celles utilisées pour les voies de trafic, également différentes entre elles.

La voie balise est également utilisée pour la transmission de messages de signalisation de contrôle (messages d'état) entre l'unité de traitement et les équipements radio (fixes, mobiles, portables ou portatifs) permettant à l'unité de traitement de contrôler les équipements radio. Ces derniers sont habituellement constamment en état de veille et communiquent avec l'unité de traitement pour la renseigner sur l'état du réseau (nombre d'équipements compris dans le réseau, état des équipements,...) et lui permettre ainsi de gérer le système.

La transmission de messages de signalisation sur la voie balise permet de ne pas nécessiter l'attribution d'une fréquence spécifique par l'unité de traitement. Ces messages sont acheminés de manière rapide et augmentent l'efficacité spectrale du réseau. Il est également possible pour un utilisateur radio de venir interroger la valeur courante du message d'état d'un autre utilisateur par cette voie balise sans établissement de communication.

La transmission de données courtes permet de véhiculer des informations de taille limitée, cette limitation résultant d'un compromis à réaliser entre les points suivants:

- le format des trames dans lesquelles ces données courtes doivent être transmises est imposé par la technique de signalisation utilisée, et donc par la ou les normes auxquelles le réseau de transmission doit répondre;
- la taille des données courtes à transmettre doit pouvoir répondre à la plupart des besoins. La transmission de données courtes correspond à un service offert à un utilisateur qui peut utiliser ce mode de transmission pour envoyer un message simple à un autre utilisateur;
- la transmission des données courtes doit être fiable, c'est à dire que les données doivent arriver à leur destinataire quel que soit le nombre d'équipements radio qui utilisent la voie balise. Une détection de collisions doit être notamment prévue pour que les données émises par les équipements radio n'interfèrent pas entre elles. La gestion des collisions est habituellement réalisée sur voie balise par un protocole d'accès aléatoire appelé "Aloha crénelé à trames dynamiques" (Dynamic Frame Slotted Aloha) pour augmenter le taux de réussite des transmissions;
- la durée globale de la transmission doit être la plus réduite possible pour éviter des risques de collision entre les messages courts provenant des différents utilisateurs et les messages de contrôle.

Sur voie balise, un protocole d'attribution de voie est généralement utilisé par l'unité de traitement afin d'indiquer à l'équipement radio le support de transmission (voie de trafic) qu'il peut emprunter.

En résumé, les procédés de transmission existants permettent la transmission de données courtes sur voie balise et la transmission de données de type phonie sur voies de trafic.

Le principal inconvénient de ce type de réseaux permettant la transmission de données courtes sur voie balise est que le risque de collisions entre les données courtes provenant d'équipements radio différents augmente avec ce nombre d'équipements radio. Le protocole d'accès Aloha crénelé à trame dynamique est alors intensivement sollicité et la transmission des données courtes peut prendre un temps important.

De plus, une voie balise unique doit supporter à la fois des données courtes (messages courts et messages d'état) et des messages de signalisation. La transmission de données courtes sur voie balise dans le sens montant limite donc la capacité de gestion en terme de trafic de la voie balise lorsque le nombre d'équipements radio reliés à l'unité de traitement est important. On limite ainsi la densité de trafic supporté par l'unité de traitement.

Le brevet américain US-A-4 831 373 décrit un procédé de réallocation dynamique de canaux entre ceux alloués à la transmission de la parole et ceux alloués à la transmission des données. Le procédé est décrit dans le cadre d'un système à groupement de voies duplex (TRUNK SYSTEM) dans lequel il est prévu que N terminaux appartenant à une même flotte, ou même groupe, transmettent et reçoivent des données sur une même voie duplex. Pour transmettre des données, un terminal sélectionne le canal de trafic parmi la pluralité de canaux de trafic qui sont disponibles et qui sont identifiés dans un message d'allocation de canal de données. Cette sélection est opérée de façon déterministe en fonction du numéro d'identification de groupe de sorte que chaque terminal dans un groupe, d'une part, sélectionne le même canal qu'un autre terminal dans ce même groupe, et, d'autre part, sélectionne un canal différent d'un autre terminal dans un autre groupe.

Ce document ne précise pas de réalisation dans le cas où les terminaux sont "indifférenciés" ou "banalisés", c'est à dire ne sont pas distingués par le groupe auquel ils appartiennent.

La présente invention a notamment pour objectif de pallier ces inconvénients.

Plus précisément, la présente invention a pour objectif de fournir un procédé de transmission de données courtes permettant de ne pas pénaliser le sens montant par rapport au sens descendant et de rééquilibrer ainsi les transmissions de données entre les deux sens de transmission.

Un autre objectif de l'invention est de fournir un tel procédé permettant de diminuer le nombre de collisions entre le sens montant et le sens descendant sur la voie balise.

Ces objectifs, ainsi que d'autres qui apparaîtront par la suite, sont atteints grâce à un procédé de transmission de données courtes entre des équipements radio et une unité de traitement tel que défini dans la revendication 1.

Le procédé de l'invention consiste donc à transmettre les données courtes sur voies de trafic au lieu de les transmettre sur la voie balise dédiée du système. On rééquilibre ainsi le flux de données entre le sens montant et le sens descendant tout en permettant des établissements de communications sensiblement plus rapides que dans l'état actuel de la norme utilisée sur ces systèmes.

Ce procédé peut être mis en oeuvre dans un système comportant des équipements radio classiques utilisant la voie balise montante pour transmettre des données courtes, le procédé de transmission de données courtes de l'invention étant alors utilisé par des équipements radio spécifiques.

Avantageusement, le message indiquant aux équipements radio l'état de disponibilité des voies de trafic est constitué par un premier message attribuant un rang à chacune des voies de trafic et par un second message reflétant l'état d'occupation de chacune des voies de trafic correspondant aux rangs.

Selon un mode de mise en oeuvre préférentiel, les premier et second messages sont transmis dans des trames de type BCAST.

On exploite ainsi des trames existantes pour informer les équipements radio de l'état de disponibilité des voies de trafic susceptibles de supporter une transmission de données courtes.

Les premier et second messages sont préférentiellement transmis cycliquement aux équipements radio, de façon à réactualiser les informations d'état de disponibilité des voies de trafic.

Avantageusement, la transmission des données courtes sur la voie montante de la voie de trafic choisie est réalisée dans des fenêtres temporelles de façon à limiter le risque de collisions des données courtes émises par au moins deux équipements radio ayant choisi la même voie de trafic montante.

Selon un mode de mise en oeuvre préférentiel, une indication de la position des fenêtres temporelles est fournie aux équipements radio par émission de messages de signalisation sur la voie balise descendante.

La voie balise descendante est donc exploitée pour permettre la synchronisation des données courtes dans des fenêtres temporelles.

Avantageusement, les fenêtres temporelles dans lesquelles les données courtes sont émises sont choisies de façon aléatoire par les équipements radio.

On réduit encore de cette façon le risque de collisions entre données courtes provenant d'équipements radio différents.

Selon un mode de mise en oeuvre préférentiel, les équipements radio ayant une donnée courte à transmettre scrutent la voie descendante de la voie de trafic choisie pendant la fenêtre temporelle choisie avant d'émettre une donnée dans la fenêtre temporelle suivante.

Cette scrutation constitue une précaution supplémentaire contre les collisions de données courtes.

Avantageusement, lorsque les données courtes sont constituées de messages d'état dont la taille n'excède pas 5 bits, la transmission d'un message d'état consiste à émettre le message d'état dans la fenêtre temporelle suivant la fenêtre temporelle pendant laquelle une scrutation de la voie de trafic descendante de la voie de trafic choisie est effectuée.

En revanche, lorsque les données courtes sont constituées de messages courts dont la taille n'excède pas 23 octets, la transmission d'un message court comprend notamment les étapes suivantes:

- émettre une première partie du message court dans une des fenêtres temporelles choisie de façon aléatoire;
- attendre un message sur la voie de trafic descendante d'invitation à continuer la transmission du message court;
- émettre sur la voie de trafic montante la seconde partie du message court dans une fenêtre temporelle.

Préférentiellement, le procédé de l'invention est appliqué à un réseau de radiotéléphonie terrestre répondant à la norme française CNET ST/PAA/TPA/2424 et/ou à la norme britannique MPT 1327.

D'autres caractéristiques et avantages de l'invention apparaîtront à la lecture de la description suivante d'un mode de mise en oeuvre préférentiel du procédé de l'invention, donné à titre illustratif et non limitatif, et des dessins annexés dans lesquels:

- la figure 1 représente le contenu d'un premier intervalle de temps transmis par l'unité de traitement aux équipements radio d'un réseau partagé;
- la figure 2 représente le contenu d'un second intervalle de temps transmis par l'unité de traitement aux équipements radio de ce réseau partagé;
- la figure 3 est un exemple de transmission de messages d'état, selon un mode de mise en oeuvre préférentiel du procédé de l'invention;
- la figure 4 est un exemple de transmission de messages courts, selon un mode de mise en oeuvre préférentiel du procédé de l'invention.

Selon l'invention, la transmission de données courtes est destinée à s'opérer sur voie de trafic. Pour permettre cette transmission, l'unité de traitement renseigne les équipements radio de l'état de disponibilité des voies de trafic capables de supporter la transmission de données courtes. Ces voies de trafic sont celles encore non affectées à une transmission de données courtes ou de données de type phonie. Pour cela, l'unité de traitement diffuse sur voie balise deux types de messages:

- un premier type de messages attribue un rang (ci-après dénommé POS) à chacune des voies de trafic (ci-après nommées CHAN);
- un second type de messages contient un champ nommé FDTC dont chaque bit reflète l'état d'occupation d'une voie de trafic du rang correspondant.

Chacun de ces messages est compris dans un intervalle de temps de 53 ms et véhicule 64 bits. D'après les normes précitées, tous les intervalles de temps ont la même longueur.

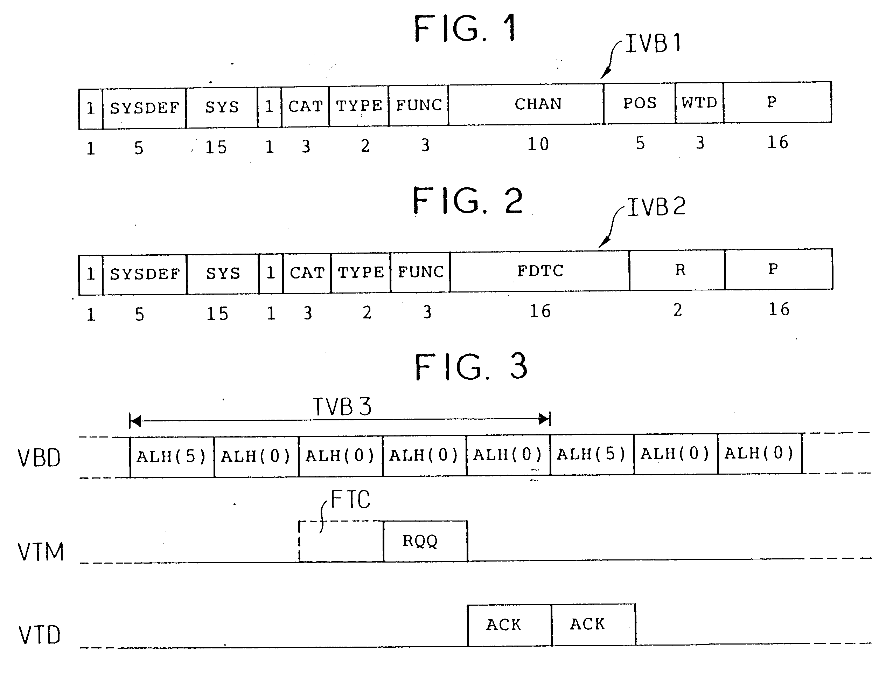

La figure 1 représente le contenu d'un premier intervalle de temps constitué de données transmises par l'unité de traitement aux équipements radio d'un réseau partagé. Ce premier intervalle de temps correspond au premier type de messages défini précédemment.

L'intervalle de temps représenté, appelé intervalle IVB1 (Intervalle de temps Voie Balise 1), correspond à un intervalle défini dans les normes précitées. Cet intervalle constitue une trame de la famille BCAST (Broadcast) servant, dans la présente invention, à la diffusion des paramètres de transmissions de données courtes.

L'intervalle IVB1 est constituée par 11 champs différents dont un certain nombre de champs connus. Ces champs sont respectivement:

- un premier champ de un bit égal à 1 marquant le début de la trame;
- un champ SYSDEF de 5 bits non défini par les normes précédentes positionné à une certaine valeur permettant de distinguer cet intervalle de temps d'un autre intervalle de temps;
- un champ SYS de 15 bits;
- un champ de 1 bit positionné à 1;
- un champ CAT de 3 bits positionné à 000;
- un champ TYPE de 2 bits valant 11;
- un champ FUNC de 3 bits valant 100;
- un champ CHAN de 10 bits contenant un numéro de canal (voie) de trafic;
- un champ POS de 5 bits contenant le rang de ce canal défini dans une trame qui sera transmise ultérieurement;
- un champ WTD de 3 bits contenant une valeur de durée d'attente de réponse sur voie de trafic. La fonction de ce champ sera précisée ultérieurement;
- un champ P de 16 bits de contrôle de parité.

Les champs CHAN, POS et WTD contiennent des bits réservés, c'est à dire non définis dans les normes précédentes. Le nombre de trames de type IVB1 transmises aux équipements radio correspond à une fraction du nombre de voies de trafic faisant partie du réseau de communication. Comme le champ CHAN possède 10 bits, le nombre de trames de ce type à transmettre peut théoriquement être égal à $2^{10}$ soit 1024. En fait, si le champ POS ne possède que 5 bits, le nombre maximal de voies de trafic auxquelles est affecté un rang est égal à 32. La bijection réalisée entre CHAN et POS affecte à chacune des voies de trafic un rang différent.

Ainsi, par exemple, le rang 12 est affecté à la voie de trafic n° 447 si POS et CHAN contiennent respectivement les valeurs 12 et 447. A chaque numéro de voie de trafic correspond une fréquence porteuse de l'information différente.

A la suite d'une pluralité de trames de type IVB1, affectant chacune un rang à chaque voie de trafic, une seconde trame est envoyée sur voie balise descendante aux équipements radio. Cette trame fait également partie de la famille BCAST et permet de renseigner les équipements radio sur la disponibilité des voies de trafic pour la transmission de données courtes, c'est à dire de messages courts et de messages d'état. Cette seconde trame correspond également à un intervalle de temps, est notée IVB2 et représentée à la figure 2.

La figure 2 représente le contenu d'une seconde trame de données transmis par l'unité de traitement aux équipements radio du réseau partagé.

La trame IVB2 comporte 10 champs différents dont les 7 premiers sont identiques à ceux de la trame IVB1 à l'exception du champ SYSDEF permettant de distinguer la trame IVB2 de la trame IVB1. La trame IVB2 comporte également un champ P de 16 bits de contrôle de parité.

Les 18 bits restants sont divisés en deux champs:
- un champ FDTC de 16 bits;
- un champ R de réserve de 2 bits non utilisés dans ce mode de mise en oeuvre.

Chacun des 16 bits du champ FDTC correspond à l'état de disponibilité d'une voie de trafic dont le rang correspond à la position de ce bit dans le champ FDTC. Par exemple, le 12ème bit de FDTC indique si la voie de trafic n°447 est disponible. Les bits de FDTC sont par exemple positionnés à 1 si la voie de trafic correspondante est disponible.

Cependant, si le nombre de voies de trafic est supérieur à 16, il peut être nécessaire d'émettre deux trames du type IVB2. Pour éviter une telle émission d'une seconde trame IVB2, la présente invention propose de n'utiliser que partiellement les 5 bits du champ POS, ces bits définissant alors un nombre compris entre 1 et 16. On définit ainsi l'état de disponibilité de 15 voies de trafic différentes.

L'émission de ces deux types de messages par l'unité de traitement permet à tous les équipements radio de connaître les voies de trafic sur lesquelles ils pourront émettre des données courtes. Les trames IVB1 et IVB2 sont transmises cycliquement aux équipements radio, à une fréquence de récurrence dépendant de la configuration de l'équipement radio. Cette fréquence est préférablement relativement élevée pour réactualiser fréquemment les informations d'état de disponibilité des voies de trafic. En effet, si une voie de trafic est réquisitionnée pour transmettre des données longues (de type phonie), elle devient indisponible pour la transmission de données courtes.

Bien entendu, il n'est pas nécessaire de répéter la transmission des trames de type IVB1 si les canaux de trafic destinés à permettre la transmission de données courtes restent identiques, ce qui sera généralement le cas. Les trames de type IVB1 peuvent donc être transmises une fois pour toutes aux équipements radio, alors que la trame IVB2 sera émise fréquemment pour prévenir les équipements radio des changements intervenus.

Ce mode d'information des équipements radio des voies de trafic disponibles ne constitue bien sur qu'un exemple non limitatif, et d'autres modes d'information sont possibles.

Les équipements radio ayant des données courtes à transmettre choisissent alors un canal de trafic parmi ceux disponibles afin d'entamer une transmission. Ce choix s'effectue de façon aléatoire afin de minimiser le risque d'un choix de voie identique par deux équipements radio ayant des données courtes à émettre.

Une telle transmission s'effectue, selon l'invention, sur une voie de trafic, en respectant préférentiellement le protocole d'accès aléatoire utilisé dans l'état de la technique pour la voie balise. Le respect du protocole d'accès aléatoire permet de diminuer le risque de collisions de données courtes sur voie de trafic. En effet, si l'information est transmise dans un créneau temporel donné, elle parviendra à son destinataire si aucune autre information n'est émise dans ce même créneau temporel. En revanche, si l'information est émise à un moment quelconque, elle sera brouillée et donc rendue incompréhensible par son destinataire si un seul de ses bits entre en recouvrement avec un bit d'une autre information transmise sensiblement au même moment. Les collisions des messages sont donc soit inexistantes (aucun recouvrement) soit totales (recouvrement complet) lorsque les messages sont transmis dans les mêmes fenêtres temporelles.

La figure 3 est un exemple de transmission de messages d'état sur une voie de trafic, selon un mode de mise en oeuvre préférentiel du procédé de l'invention.

Selon l'invention, l'émission des données courtes est réalisée en synchronisme avec des fenêtres temporelles émises par l'unité de traitement sur la voie balise. Les équipements radio doivent alors se caler temporellement dans une des fenêtres avant d'émettre une donnée courte. Le choix d'une fenêtre temporelle est avantageusement réalisé de manière aléatoire par chacun des équipements radio.

De façon connue, l'unité de traitement envoie en permanence sur voie balise descendante VBD une invitation à transmettre une demande d'accès au réseau. Cette invitation se présente sous la forme de trames de type TVB3 composées chacune de plusieurs fenêtres de 64 bits constituant des messages de signalisation. Entre chacune des fenêtres représentées est émise une trame de la famille BCAST, par exemple une trame de type IVB2 reflétant l'état de disponibilité de voies de trafic. Les trames de cette famille ne sont pas représentées sur la figure pour faciliter la compréhension du déroulement du procédé de transmission. Chaque fenêtre est composée d'un mot de code système qui identifie le système et assure la synchronisation nécessaire, et d'un mot adresse qui identifie la nature du message. La présente invention propose d'utiliser ces messages d'invitation à transmettre véhiculés sur la voie balise descendante VBD pour émettre des données courtes dans ces créneaux temporels sur voie de trafic.

La synchronisation des équipements radio est assurée par transmission continue de la trame TVB3 sur la voie balise descendante VBD. La première fenêtre temporelle contient un message de signalisation ALH(5) indiquant aux équipements radio que cinq fenêtres temporelles seront émises par la suite. Les quatre premières fenêtres contiennent chacune un message de signalisation ALH(0) correspondant à une fenêtre temporelle libre, la cinquième fenêtre étant utilisée pour marquer le cadencement suivant et pouvant également être utilisée pour la synchronisation. Les équipements radio disposent donc de ces quatre fenêtres temporelles pour transmettre leurs messages d'état dont la taille n'excède pas 5 bits. Le nombre de fenêtres temporelles émises est fonction de la configuration de l'unité de traitement, ce nombre pouvant évoluer dans le temps, comme il sera décrit par la suite.

Chaque équipement radio choisit alors aléatoirement une de ces cinq fenêtres temporelles pour transmettre son message d'état sur la voie de trafic montante VTM qu'il aura précédemment choisie également de façon aléatoire.

Avant d'émettre son message d'état, appelé RQQ, un équipement radio scrute la voie de trafic descendante VTD correspondant à la voie de trafic choisie, cette scrutation s'opérant par exemple pendant la fenêtre temporelle FTC choisie. Sur la figure 3, la fenêtre temporelle choisie FTC est la deuxième fenêtre ALH(0) et la scrutation a donc lieu pendant cette deuxième fenêtre ALH(0). Si pendant cette fenêtre temporelle FTC, l'équipement radio lit un des messages de signalisation suivants sur la voie de trafic descendante, il interrompt sa tentative et revient sur la voie balise afin de choisir une autre fenêtre d'accès conformément au protocole d'accès aléatoire:

- GTC: ordre de changement de voie de trafic;
- ALH (M=20,IDENT=DUMMYI): réservation de la fenêtre temporelle suivante;
- AHYC: invitation à transmettre les données courtes;
- MAINT: message de maintien de communication;
- CLEAR: message de fin de communication.

La détection d'un tel message est réalisée par détection de porteuse. On évite ainsi d'émettre sur une voie de trafic véhiculant déjà des informations de signalisation à l'attention d'un autre équipement radio.

Si aucun des messages de signalisation précédent n'est reçu pendant la fenêtre temporelle FTC choisie, l'équipement radio transmet son message d'état RQQ pendant la fenêtre suivante, sur la voie de trafic montante.

Si le message RQQ n'est pas entré en collision avec un autre message, le destinataire du message RQQ envoie sur la voie de trafic descendante VTD un double accusé de réception ACR. Deux messages ACK sont ici prévus pour augmenter les chances de réception de l'acquittement. Ces messages d'acquittement sont envoyés après un temps dont la valeur est contenue dans le champ WTD de la trame IVB1. Dans l'exemple de cette figure, la réponse est immédiate, c'est à dire que le champ WTD contient la valeur 0.

En revanche, si une collision a eu lieu, notamment avec un autre message transmis pendant la même fenêtre d'accès de la même voie de trafic montante VTM, le processus d'accès aléatoire est repris, c'est à dire que l'équipement radio choisit une autre fenêtre d'accès. L'unité de traitement peut, si de nombreuses collisions ont lieu, c'est à dire si le nombre de données courtes à transmettre est important, porter le nombre de fenêtres temporelles à 10 au lieu de 5.

Il est à noter que le risque de collisions est extrêmement réduit et égal au rapport :

$$RP = N_{dcat}/N_{posd}.N_{fen},$$

où:

- $N_{dcat}$ est le nombre d'équipements radio ayant une donnée courte à transmettre;
- $N_{posd}$ est le nombre de positions (POS) disponibles dans le champ FDTC;
- $N_{fen}$ est le nombre de fenêtres temporelles d'une trame de type TVB3.

Ce risque RP s'entend sans la scrutation préalable de la voie de trafic descendante permettant de diminuer encore le risque de collisions et d'augmenter ainsi le taux de réussite des transmissions.

Bien entendu, tous les équipements radio fonctionnent en semi-duplex, c'est à dire qu'une voie fonctionne à l'alternat, alors que l'unité de traitement fonctionne en full-duplex pour pouvoir émettre et recevoir simultanément des données.

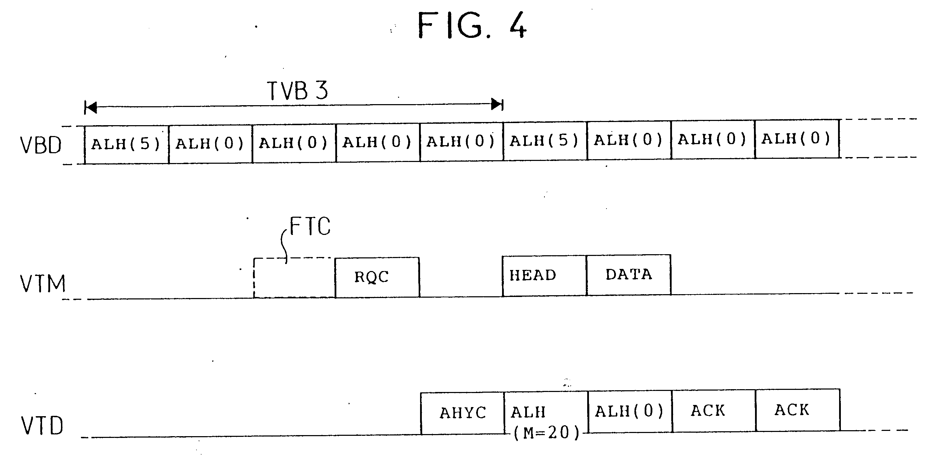

La figure 4 est un exemple de transmission de messages courts, selon un mode de mise en oeuvre préférentiel du procédé de l'invention.

L'unité de traitement émet sur la voie balise descendante VBD des trames TVB3 identiques aux précédentes. Une scrutation de la voie de trafic descendante VTD correspondant à la voie de trafic choisie a lieu pendant la fenêtre temporelle choisie FTC. Si aucun des messages précédemment mentionnés n'est lu pendant cette fenêtre FTC, l'équipement radio ayant un message court à transmettre émet un message RQC de demande de réservation de la voie de trafic. Ce message fait partie du message court à transmettre. Si une collision a lieu, la procédure est reprise comme précédemment indiqué, c'est à dire que l'équipement radio attend un autre message du type ALH(5) pour choisir une autre fenêtre temporelle. Si le message parvient à l'unité de traitement, celle-ci émet d'abord un message de signalisation AHYC invitant l'équipement radio à émettre le reste du message court, avant d'émettre un message de signalisation de type ALH(M=20) sur la voie de trafic descendante VTD pour occuper cette voie de trafic afin que personne d'autre n'émette sur la voie de trafic montante. L'équipement radio émet alors un message d'entête HEAD pendant la fenêtre ALH(M=20) avant d'envoyer DATA qui correspond au reste du message court, pendant une fenêtre ALH(0) suivant l'envoi du message ALH(M=20). Le message HEAD contient une information correspondant au nombre de messages de type DATA qui seront envoyés. L'unité de traitement envoie ensuite deux messages ACR indiquant à l'équipement radio que le message a bien été reçu. Chaque message de type DATA contient au maximum 46 bits de messages courts et plusieurs DATA peuvent se succéder si le message court à envoyer est plus long. Il peut y avoir jusqu'à 4 messages DATA consécutifs. De même, le nombre de messages de type ALH(M=20) correspond au nombre de messages de type DATA.

L'application de ce procédé de transmission de données courtes à des équipements radio spécifiques n'est pas incompatible avec l'intégration de ce procédé dans un réseau de transmission existant, les équipements radio existants pouvant continuer à utiliser la voie balise pour transmettre des données courtes, alors que des équipements radio comprenant les messages IVB1 et IVB2 pourront émettre sur des voies da trafic.

Le procédé de l'invention permet donc de limiter le risque de collisions de données sur voie balise et sur voies de trafic. Il permet ainsi d'augmenter la vitesse d'établissement des communications puisque le nombre de collisions sur voie balise est réduit. De plus, le partage des données entre la voie balise et les différentes voies de trafic est rééquilibré dans les deux sens de transmission.

Le procédé de l'invention est préférentiellement appliqué aux réseaux de transmission définis dans les normes précitées, mais peut également être utilisé dans tous les réseaux où des problèmes de collision entre des données courtes sur voie balise retardent l'établissement de communications et où il est possible d'utiliser au moins une partie des voies de trafic pour la transmission de ces données courtes.

**Revendications**

1. Procédé de transmission de données courtes entre des équipements radio et une unité de traitement dans un réseau partagé, ledit réseau comprenant, d'une part, une voie balise destinée à véhiculer des messages de signalisation de contrôle et, d'autre part, une pluralité de voies de trafic destinées à véhiculer des messages de type phonie, ladite voie balise et lesdites voies de trafic comprenant chacune une voie montante et une voie descendante, ledit procédé comprenant les étapes de:
   - transmission par l'unité de traitement à destination desdits équipements radio, sur la voie balise descendante, d'un message (IVB1, IVB2) indiquant auxdits équipements radio des états de disponibilité respectivement associés auxdites voies de trafic;
   - choix, dans chacun des équipements radio ayant des données courtes (RQQ, RQC, DATA) à transmettre, de l'une desdites voies de trafic qui est indiquée disponible par l'état de disponibilité associé, et
   - transmission par ledit chacun des équipements radio desdites données courtes sur la voie de trafic montante (VTM) de ladite voie de trafic choisie,
   caractérisé en ce que ladite étape de choix de l'une des voies de trafic parmi les voies de trafic qui sont indiquées disponibles est réalisée de façon aléatoire.

2. Procédé selon la revendication 1, caractérisé en ce que ledit message indiquant auxdits équipements radio l'état de disponibilité desdites voies de trafic est constitué par un premier message (IVB1, CHAN, POS) attribuant un rang à chacune desdites voies de trafic et par un second message (IVB2, FDTC) reflétant l'état d'occupation de chacune desdites voies de trafic correspondant auxdits rangs.

3. Procédé selon la revendication 2, caractérisé en ce que lesdits premier (CHAN, POS) et second (FDTC) messages sont transmis dans des trames (IVB1, IVB2) de type BCAST.

4. Procédé selon l'une des revendications 2 et 3, caractérisé en ce que lesdits premier (IVB1, CHAN, POS) et second (IVB2, FDTC) messages sont transmis cycliquement auxdits équipements radio.

5. Procédé selon l'une des revendications 1 à 4, caractérisé en ce que la transmission desdites données courtes (RQQ, RQC, DATA) sur la voie montante (VTM) de la voie de trafic choisie est réalisée dans des fenêtres temporelles (ALH(0), ALH(5)) de façon à limiter le risque de collisions des données courtes (RQQ, RQC, DATA) émises par au moins deux équipements radio ayant choisi la même voie (VTM) de trafic montante.

6. Procédé selon la revendication 5, caractérisé en ce qu'une indication de la position desdites fenêtres temporelles (ALH(0), ALH(5)) est fournie auxdits équipements radio par émission de messages de signalisation (ALH(0), ALH(5)) sur ladite voie (VBD) balise descendante.

7. Procédé selon l'une des revendications 5 et 6, caractérisé en ce que les fenêtres temporelles dans lesquelles lesdites données courtes sont émises sont choisies de façon aléatoire par lesdits équipements radio.

8. Procédé selon l'une des revendications 5 et 6, caractérisé en ce que lesdits équipements radio ayant une donnée courte à transmettre scrutent la voie descendante de ladite voie de trafic choisie pendant ladite fenêtre temporelle choisie (FTC) avant d'émettre une donnée dans la fenêtre temporelle suivante.

9. Procédé selon l'une des revendications 1 à 8, caractérisé en ce que lesdites données courtes sont constituées de messages d'état (RQQ) dont la taille n'excède pas 5 bits, la transmission d'un message d'état consistant à émettre ledit message d'état (RQQ) dans la fenêtre temporelle suivant la fenêtre temporelle (FTC) pendant laquelle une scrutation de la voie (VTD) de trafic descendante de ladite voie de trafic choisie est effectuée.

10. Procédé selon l'une des revendications 1 à 8, caractérisé en ce que lesdites données courtes sont constituées de messages courts (RQC, DATA) dont la taille n'excède pas 23 octets, la transmission d'un message court (RQC, DATA) comprenant notamment les étapes suivantes:
    - émettre une première partie (RQC) dudit message court dans une desdites fenêtres temporelles (ALH(0), ALH(5)) choisie de façon aléatoire;
    - attendre un message (AHYC) sur la voie (VTD) de trafic descendante d'invitation à continuer la transmission dudit message court (RQC, DATA);
    - émettre sur ladite voie (VTM) de trafic montante la seconde partie (DATA) dudit message court dans une fenêtre temporelle (ALH(0)).

## Patentansprüche

1. Method of transmitting short data between the radio equipments and a processor unit in a shared network, said network comprising, firstly, a control channel adapted to convey signalling and control messages and, secondly, a plurality of traffic channels adapted to convey speech type messages, said control channel and said traffic channels each comprising a return channel and a forward channel, said method comprising the steps of:
    - transmitting from the processor unit to said radio equipments on the forward control channel a message (IVB1, IVB2) telling said radio equipments the respective availability status of said traffic channels;
    - in each radio equipment having short data (RQQ, RQC, DATA) to transmit, choosing one of said traffic channels indicated as available by the associated availability status, and
    - transmission by each of said radio equipments of said short data on the return traffic channel (VTM) of said chosen traffic channel,
    characterised in that said step of choosing one of the traffic channels from the traffic channels indicated as available is effected at random.

2. Method according to claim 1 characterised in that said message telling said radio equipments the availability status of said traffic channels comprises a first message (IVB1, CHAN, POS) allocating a position to each of said traffic channels and a second message (IVB2, FDTC) reflecting the busy status of each of said traffic channels corresponding to said positions.

3. Method according to claim 2 characterised in that said first message (CHAN, POS) and second message (FDTC) are transmitted in BCAST type frames (IVB1, IVB2).

4. Method according to claim 2 or claim 3 characterised in that said first message (IVB1, CHAN, POS) and said second message (IVB2, FDTC) are transmitted cyclically to said radio equipments.

5. Method according to any one of claims 1 to 4 characterised in that said short data (RQQ, RQC, DATA) is transmitted on the return channel (VTM) of the chosen traffic channel in time windows (ALH(0), ALH(5)) so as to limit the risk of collision of short data (RQQ, RQC, DATA) transmitted by at least two radio equipments having chosen the same return traffic channel (VTM).

6. Method according to claim 5 characterised in that an indication of the position of said time windows (ALH(0), ALH(5)) is supplied to said radio equipments by transmission of signalling messages (ALH(0), ALH(5)) on said forward control channel (VBD).

7. Method according to claim 5 or claim 6 characterised in that the time windows in which said short data is transmitted are chosen at random by said radio equipments.

8. Method according to claim 5 or claim 6 characterised in that said radio equipments having short data to transmit scan the forward channel of said chosen traffic channel during said chosen time window (FTC) before transmitting data in the next time window.

9. Method according to any one of claims 1 to 8 characterised in that said short data comprises status messages (RQQ) the size of which does not exceed five bits, the transmission of a status message consisting in transmitting said status message (RQQ) in the time window following the time window (FTC) during which the forward traffic channel (VTD) of said chosen traffic channel is scanned.

10. Method according to any one of claims 1 to 8 characterised in that said short data comprises short messages (RQC, DATA) the size of which does not exceed 23 bytes, the transmission of a short message (RQC, DATA) including the following steps:
   - transmitting a first part (RQC) of said short message in one of said time windows (ALH(0), ALH(5)) chosen at random;
   - waiting for a message (AHYC) on the forward traffic channel (VTD) inviting continued transmission of said short message (RQC, DATA);
   - sending on said return traffic channel (VTM) the second part (DATA) of said short message in a time window (ALH(0)).

**Claims**

1. Verfahren zur Übertragung von kurzen Datenmeldungen zwischen Funkanlagen und einer Verarbeitungseinheit in einem Netz, wobei das Netz einerseits einen Dienstkanal zur Übertragung von Signalisierungs- und Kontrollmeldungen und andererseits zahlreiche Verkehrskanäle zur Übertragung von Gesprächsmeldungen aufweist und wobei der Dienstkanal und die Verkehrskanäle je einen zentripedalen und einen zentrifugalen Kanal bezüglich der Verarbeitungseinheit aufweisen, wobei das Verfahren die folgenden Phasen enthält:
   - Übertragung einer den Funkanlagen den Belegungszustand der Verkehrskanäle anzeigenden Meldung (IVB1, IVB2) durch die Verarbeitungseinheit an die Funkanlagen auf dem zentrifugalen Dienstkanal,
   - Auswahl eines der Verkehrskanäle, der aufgrund des zugeordneten Verfügbarkeitszustands als verfügbar bezeichnet wird, in jeder der Funkanlagen, die kurze Datenmeldungen (RQQ, RQC, DATA) übertragen wollen,
   - und Übertragung der kurzen Datenmeldungen durch die jeweiligen Funkanlagen auf dem zentripedalen Verkehrskanal (VTM) des ausgewählten Verkehrskanals,

dadurch gekennzeichnet, daß die Phase der Wahl eines der Verkehrskanäle unter den Verkehrskanälen, die als verfügbar angegeben sind, zufällig erfolgt.

2. Verfahren nach Anspruch 1, dadurch gekennzeichnet, daß die Meldung, die den Funkanlagen den Verfügbarkeitszustand der Verkehrskanäle angibt, aus einer ersten Meldung (IVB1, CHAN, POS), die jedem der Verkehrskanäle einen Rang zuweist, und aus einer zweiten Meldung (IVB2, FDTC) besteht, die den Belegungszustand jedes der Verkehrskanäle entsprechend diesen Rängen wiedergibt.

3. Verfahren nach Anspruch 2, dadurch gekennzeichnet, daß die erste (CHAN, POS) und die zweite Meldung (FDTC) in Rahmen (IVB1, IVB2) vom Typ BCAST übertragen werden.

4. Verfahren nach einem der Ansprüche 2 und 3, dadurch gekennzeichnet, daß die erste Meldung (IVB1, CHAN, POS) und die zweite Meldung (IVB2, FDTC) zyklisch an die Funkanlagen übertragen werden.

5. Verfahren nach einem der Ansprüche 1 bis 4, dadurch gekennzeichnet, daß die Übertragung der kurzen Datenmeldungen (RQQ, RQC, DATA) auf dem zentripedalen Kanal (VTM) des gewählten Verkehrskanals in Zeitfenstern (ALH(0), ALH(5)) erfolgt, so daß die Kollisionsgefahr der kurzen Datenmeldungen (RQQ, RQC, DATA) begrenzt wird, die von mindestens zwei Funkanlagen ausgesendet werden, welche den gleichen zentripedalen Verkehrskanal (VTM) gewählt haben.

6. Verfahren nach Anspruch 5, dadurch gekennzeichnet, daß eine Angabe über die Lage der Zeitfenster (ALH(0), ALH(5)) den Funkanlagen durch Aussendung von Signalisierungsmeldungen (ALH(0), ALH(5)) auf dem zentrifugalen Dienstkanal (VBD) geliefert wird.

7. Verfahren nach einem der Ansprüche 5 und 6, dadurch gekennzeichnet, daß die Zeitfenster, in denen die kurzen Datenmeldungen ausgesendet werden, zufällig durch die Funkanlagen ausgewählt werden.

8. Verfahren nach einem der Ansprüche 5 und 6, dadurch gekennzeichnet, daß die Funkanlagen, die eine kurze Datenmeldung aussenden wollen, den zentrifugalen Kanal des gewählten Verkehrskanals während des gewählten Zeitfensters (FTC) überprüfen, ehe sie eine Datenmeldung im nächstfolgenden Zeitfenster aussenden.

9. Verfahren nach einem der Ansprüche 1 bis 8, dadurch gekennzeichnet, daß die kurzen Datenmeldungen aus Zustandsmeldungen (RQQ) bestehen, deren Umfang fünf Bits nicht übersteigt, und daß die Übertragung einer Zustandsmeldung darin besteht, daß die Zustandsmeldung (RQQ) in dem Zeitfenster ausgesendet wird, das auf das Zeitfenster (FTC) folgt, während dem eine Überprüfung des zentrifugalen Verkehrskanals (VTD) des gewählten Verkehrskanals durchgeführt wurde.

10. Verfahren nach einem der Ansprüche 1 bis 8, dadurch gekennzeichnet, daß die kurzen Datenmeldungen aus kurzen Meldungen (RQC, DATA) bestehen, deren Umfang 23 Bytes nicht überschreitet, wobei dann die Übertragung einer kurzen Meldung (RQC, DATA) insbesondere die folgenden Phasen enthält:
   - Aussendung eines ersten Teils (RQC) der kurzen Meldung in einem der zufällig ausgewählten Zeitfenster (ALH(0), ALH(5)),
   - Warten auf eine Meldung (AHYC) betreffend die Aufforderung zur Fortsetzung der Übertragung der kurzen Meldung (RQC, DATA) auf dem zentrifugalen Verkehrskanal (VTD),
   - und Aussenden des zweiten Teils (DATA) der kurzen Meldung in einem Zeitfenster (ALH(0)) auf dem zentripedalen Verkehrskanal (VTM).

## FIG. 1

IVB1

| 1 | SYSDEF | SYS | 1 | CAT | TYPE | FUNC | CHAN | POS | WTD | P |
|---|--------|-----|---|-----|------|------|------|-----|-----|---|
| 1 | 5 | 15 | 1 | 3 | 2 | 3 | 10 | 5 | 3 | 16 |

## FIG. 2

IVB2

| 1 | SYSDEF | SYS | 1 | CAT | TYPE | FUNC | FDTC | R | P |
|---|--------|-----|---|-----|------|------|------|---|---|
| 1 | 5 | 15 | 1 | 3 | 2 | 3 | 16 | 2 | 16 |

## FIG. 3

TVB3

VBD

| ALH(5) | ALH(0) | ALH(0) | ALH(0) | ALH(0) | ALH(5) | ALH(0) | ALH(0) |
|--------|--------|--------|--------|--------|--------|--------|--------|

FTC

VTM

| RQQ |
|-----|

VTD

| ACK | ACK |
|-----|-----|

EP 0 557 175 B1

# FIG. 4

EP 0 557 175 B1

TVB 3

| VBD | ALH(5) | ALH(0) | ALH(0) | ALH(0) | ALH(0) | ALH(5) | ALH(0) | ALH(0) | ALH(0) |
|-----|--------|--------|--------|--------|--------|--------|--------|--------|--------|

FTC

| VTM | | RQC | | HEAD | DATA |
|-----|--|-----|--|------|------|

| VTD | AHYC | ALH (M=20) | ALH(0) | ACK | ACK |
|-----|------|------------|--------|-----|-----|